# EUROPÄISCHE PATENTANMELDUNG

(11) **EP 1 935 241 A1**
(43) Veröffentlichungstag der Anmeldung: **25.06.2008**
(21) Anmeldenummer: 07020969.7
(22) Anmeldetag: 26.10.2007
(51) Int. Cl.: A01K 31/00

(54) **Broilerkäfig**

(30) Priorität: 22.12.2006 DE 202006019321 U; 10.01.2007 DE 202007000373 U; 02.02.2007 DE 202007001531 U
(71) Anmelder: Kühlmann, Josef, 48366 Laer (DE)
(72) Erfinder: Kühlmann, Josef, 48366 Laer (DE)
(74) Vertreter: Habbel, Hans-Georg

(57) **Zusammenfassung**

Die Erfindung bezieht sich auf einen Broilerkäfig mit einem Gitterboden, der in Längsachse jeder Käfigreihe gesehen in einzelne, voneinander unabhängige und aufeinanderfolgende Abschnitte unterteilt ist und ein unterhalb der Käfige angeordnetes, umlaufendes Förderband aufweist, wobei der Gitterboden als Rostboden (1) ausgebildet ist mit Querträger (2,3) und die Querträger (2,3) verbindenden Längsträgern (4), wobei in den Längsträgern (4) Befestigungsöffnungen (5) vorgesehen sind und eine Broilermatte (6) auf der Oberseite der Längs- und Querträger (4,2,3) aufliegt und mittels druckknopfartigen Befestigungsstreifen (7) über die Befestigungsöffnungen (5) an dem Rostboden (1) befestigt ist.

## Beschreibung

Die Erfindung bezieht sich auf einen Broilerkäfig gemäß dem Oberbegriff des Hauptanspruches.

In der Praxis und aus der US 5 570 657 sind Broilerkäfige bekannt geworden, die der Aufzucht von Masthähnchen dienen. Bei Erreichen des sogenannten Schlachtgewichtes werden diese Tiere dem Käfig entnommen und einer Schlachterei zugeführt.

Die Tiere stehen dabei auf einem Gitterboden, der von außerhalb der Käfige betätigbar so zusammenfaltbar ist, dass er ein darunterliegendes Förderband freigibt, mit dem die Tiere aus dem Stall gefördert werden können.

Diese seit vielen Jahren bekannte Einrichtung hat sich im Prinzip in der Praxis bewährt, hat aber den Nachteil, dass durch den innerhalb des Käfigs zusammengefalteten Gitterboden Raum innerhalb des Käfigs verschenkt wird. Weiterhin ist die Reinigung eines solchen Käfigbodens außerordentlich schwierig.

Der Erfindung liegt daher die Aufgabe zugrunde, einen möglichst einfach ausgestalteten Käfigboden vorzuschlagen, der leicht gereinigt werden kann und der vollständig aus dem Käfig entfernt werden kann, so daß innerhalb des Käfigs bei Abtransport der Tiere kein Raum verschenkt wird.

Diese der Erfindung zugrundeliegende Aufgabe wird durch die Lehre des Hauptanspruches gelöst.

Der Erfindung liegt weiterhin die Aufgabe zugrunde, in einem solchen der Aufzucht von Schlachttieren dienenden Broilerkäfig den Tieren die Möglichkeit zu bieten, ihrem natürlichen Scharredrang zu folgen.

Dieser der Erfindung zugrundeliegenden Aufgabe wird durch den Vorschlag gemäß Anspruch 5 der beigefügten Ansprüche entsprochen.

Vorteilhafte Ausgestaltungen der Erfindung sind in den weiteren Unteransprüchen erläutert.

Mit anderen Worten ausgedrückt wird vorgeschlagen, dass der eigentliche Käfigboden als Rostboden ausgebildet ist, der durch zwei Querträger und mehreren die Querträger verbindenden Längsträgern gebildet wird. Der Begriff "Quer..." und "Längs..." bezieht sich dabei auf die Ausbildung der Käfiganlage, d. h. in Längsrichtung gesehen ist die "Längserstreckung" der Käfiganlage gemeint, bei der mehrere Käfige nebeneinander angeordnet sind und mit der Bezeichnung "Quererstreckung" ist eben eine Richtung gemeint, die sich quer zur Längserstreckung ausrichtet.

Durch die im Rostboden ausgeformte, geschlossene Rinne, die mit entsprechender Spreu gefüllt werden kann, wird den Tieren die Möglichkeit gegeben, zu scharren, wobei diese Rinne nicht besonders tief sein muß und als Spreu jeder übliche Einspreu, wie er in der Tierhaltung üblich ist, eingesetzt werden kann.

Der so gebildete Rostboden weist die erforderliche Stabilität auf und dabei sind vorzugsweise in den Längsträgern Befestigungsöffnungen vorgesehen, mit der eine auf den Rostboden auflegbare, aus Kunststoff oder Metall bestehende sogenannte Broilermatte festgelegt werden kann.

Druckknopfartige Befestigungsstreifen können durch die Öffnungen der Broilermatte in die in den Längsträgern vorgesehenen Befestigungsöffnungen eingedrückt werden und legen damit die Broilermatte auf dem eigentlichen Rostboden fest, wobei entscheidend ist, dass ein leichtes Lösen der Broilermatte möglich ist, so daß diese in irgendwelchen Wascheinrichtungen problemlos gereinigt werden kann.

Selbstverständlich ist es auch möglich, dass auch auf den Querträgern entsprechende Befestigungsöffnungen vorgesehen sind, in die entsprechende druckknopfartige Befestigungsstreifen eingedrückt werden können und damit die eigentliche Broilermatte festlegen.

Die Lagerung und Führung des Rostbodens innerhalb der Käfiganlage erfolgt durch Nutstreben, die U-förmig ausgebildet sind und in die die Querstreben des Rostbodens einführbar sind. Es ist offensichtlich, dass ohne große Probleme diese Nutstreben ein Herausziehen des Rostbodens ermöglichen, wobei dieses Herausziehen des Rostbodens auch bei geschlossener Käfigfrontseite möglich ist, so daß keine Tiere entweichen können.

Ein Festlegen des Rostbodens innerhalb der Nutstreben erfolgt durch wenigstens einen Riegel, vorzugsweise zwei Riegel, die an der gangseitigen Mündung der Nutstreben angeordnet werden.

Ein Ausführungsbeispiel der Erfindung wird nachfolgend anhand der Zeichnungen erläutert. Die Zeichnungen zeigen dabei in
- Fig. 1: eine Ansicht auf einen teilweise aus dem Käfig herausgezogenen Rostboden, in
- Fig. 2: in größerem Maßstab den den Rostboden in den Nutstreben festlegenden Riegel, in
- Fig. 3: eine Draufsicht auf eine Broilermatte und in
- Fig. 4: einen Rostboden mit ausgeformter Rinne in Draufsicht und im Querschnitt.

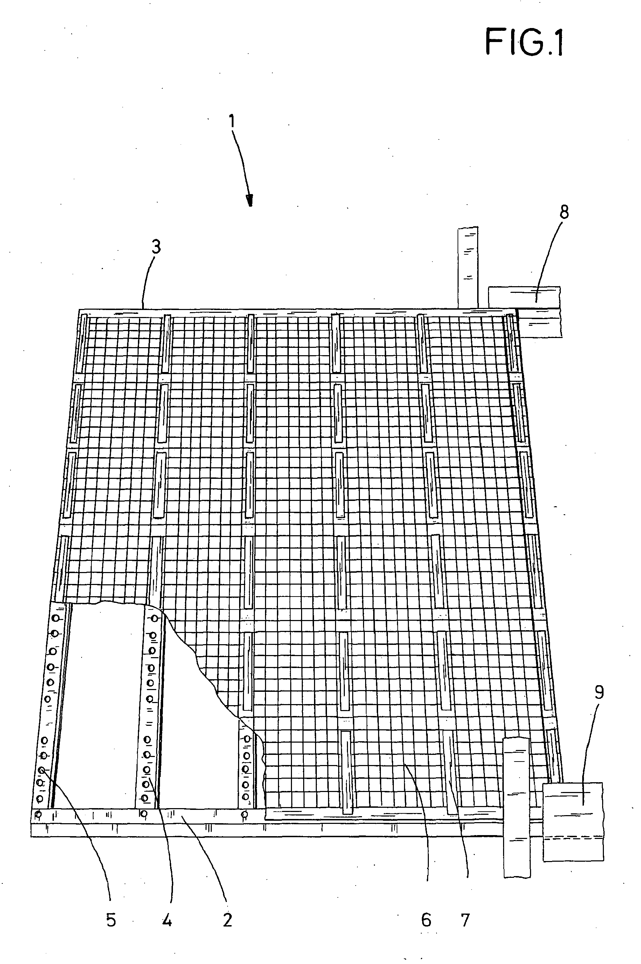

In Fig. 1 ist der Rostboden aus seinen Nutstreben 8 und 9 nach vorne vorgezogen, d. h. in den Gang der Käfiganlage, und es ist erkennbar, insbesondere durch den in Fig. 1 vorgenommenen Ausschnitt, dass dieser Rostboden 1 aus Querträgern 2 und 3 sowie diese verbindenden Längsträgern 4 besteht. In den Längsträgern 4 sind Befestigungsöffnungen 5 vorgesehen, die der Festlegung einer Broilermatte 6 vorzugsweise aus Kunststoff auf der Oberseite des Rostbodens dienen.

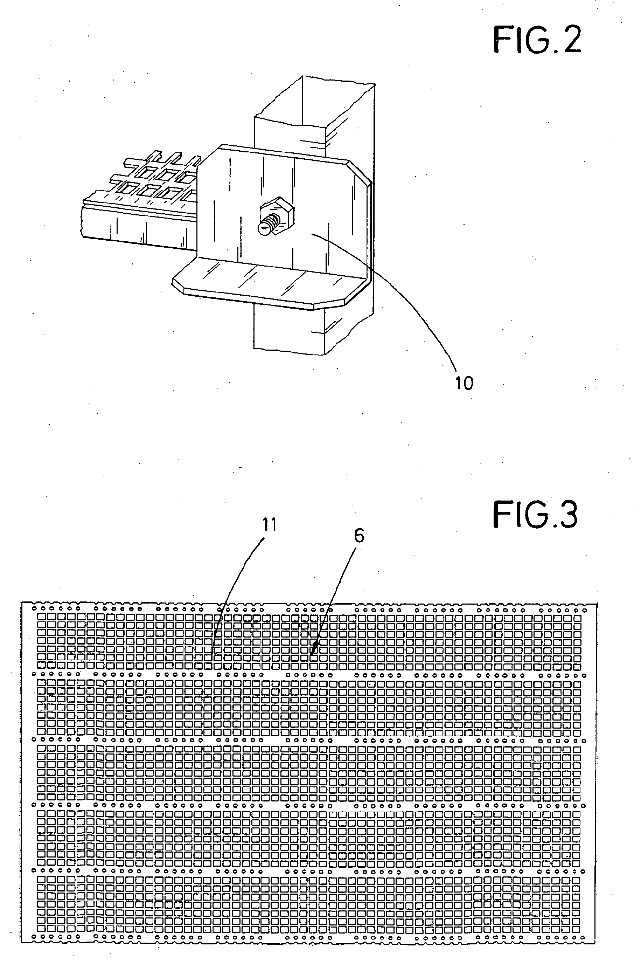

Die Festlegung erfolgt durch druckknopfartige Befestigungsstreifen 7, die mit vorstehenden Noppen entweder durch die Öffnungen der Broilermatte 6 greifend in entsprechende Befestigungsöffnungen der Längsstäbe führen oder - wie dies besonders deutlich die Fig. 3 zeigt - die Boilermatte 6 ist so ausgebildet, dass auch in der Boilermatte 6 Befestigungsöffnungen 11 vorgesehen sind, die zur Aufnahme der Befestigungsstreifen 7 dienen.

An der gangseitigen Mündung der Nutstrebe 8 bzw. und/oder der Nutstrebe 9 ist ein Riegel 10 vorgesehen, der ein sicheres Festlegen des Rostbodens 1 in der Arbeitsstellung innerhalb des Käfigs gewährleistet.

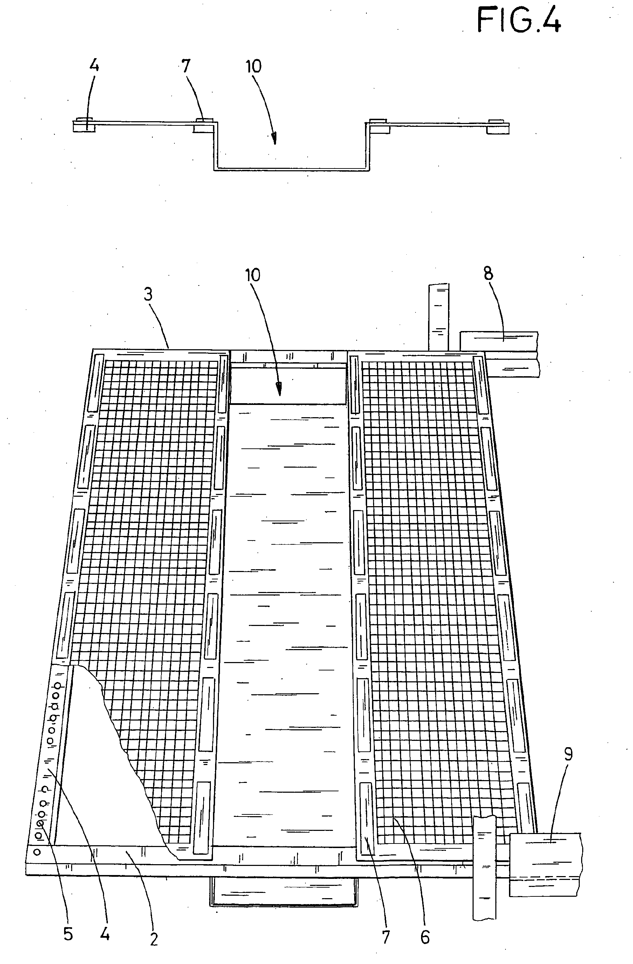

Fig. 4 zeigt eine Draufsicht auf einen Rostboden, bei welchem eine geschlossene Rinne 10 ausgeformt ist, die der Aufnahme der Spreu dient, so dass die auf dem Rostboden befindlichen Tiere die Möglichkeit haben, zu scharren.

## Patentansprüche

1. Broilerkäfig mit einem Gitterboden, der in Längsachse jeder Käfigreihe gesehen in einzelne, voneinander unabhängige und aufeinanderfolgende Abschnitte unterteilt ist und ein unterhalb der Käfige angeordnetes, umlaufendes Förderband, **dadurch gekennzeichnet, dass** der Gitterboden als Rostboden (1) ausgebildet ist mit Querträger (2, 3) und die Querträger (2, 3) verbindenden Längsträgern (4), wobei in den Längsträgern (4) Befestigungsöffnungen (5) vorgesehen sind und eine Broilermatte (6) auf der Oberseite der Längs- und Querträger (4, 2, 3) aufliegt und mittels druckknopfartigen Befestigungsstreifen (7) über die Befestigungsöffnungen (5) an dem Rostboden (1) befestigt ist.

2. Broilerkäfig nach Anspruch 1, **dadurch gekennzeichnet, dass** in den Querträgern (2, 3) Befestigungsöffnungen (5) vorgesehen sind.

3. Broilerkäfig nach Anspruch 1, **dadurch gekennzeichnet, dass** die Broilermatte (6) aus Kunststoff besteht.

4. Broilerkäfig nach Anspruch 1, **dadurch gekennzeichnet, dass** die Broilermatte (6) aus Metall besteht.

5. Broilerkäfig nach einem der Ansprüche 1 bis 4, **gekennzeichnet durch** eine in dem Rostboden (1) ausgeformte, geschlossene Rinne (10) zur Aufnahme von Spreu.

6. Broilerkäfig nach einem oder mehreren der vorhergehenden Ansprüche, **dadurch gekennzeichnet, dass** sich der Rostboden (1) in quer zur Längserstreckung ausgerichteten Nutstreben (8, 9) führt.

7. Broilerkäfig nach einem oder mehreren der vorhergehenden Ansprüche, **gekennzeichnet durch** wenigstens einen Riegel (10) am gangseitigen Ende wenigstens einer Nutstrebe (8, 9) zur Festlegung des Rostbodens (1) in der eingeschobenen Stellung.
